# EUROPÄISCHE PATENTSCHRIFT

(11) **EP 0 496 964 B1**
(45) Veröffentlichungstag und Bekanntmachung des Hinweises auf die Patenterteilung: **08.02.1995**
(21) Anmeldenummer: 91119606.1
(22) Anmeldetag: 16.11.1991
(51) Int. Cl.: B60J 3/02

(54) **Sonnenblende für Fahrzeuge**
Sun visor for vehicles
Pare-soleil pour véhicules

(30) Priorität: 29.01.1991 DE 4102517
(43) Veröffentlichungstag der Anmeldung: 05.08.1992
(73) Patentinhaber: Gebr. Happich GmbH, D-42097 Wuppertal (DE)
(72) Erfinder: Renahy, Xavier, F-70800 Conflans/Lanterne (FR)

(56) Entgegenhaltungen:
- EP-A- 0 035 596
- EP-A- 0 261 906
- EP-A- 0 403 846
- DE-A- 3 808 795
- DE-A- 3 936 350
- US-A- 4 213 169

## Beschreibung

Die Erfindung bezieht sich auf eine Sonnenblende für Fahrzeuge mit einem Sonnenblendenkörper, der eine Spiegelkassette trägt, welche aus einem Spiegel, einem Spiegelrahmen und einer daran einseitig angelenkten Abdeckklappe besteht, wobei der Spiegelrahmen zum einen den Spiegel hält und zum anderen eine Auflagefläche für die Abdeckklappe bildet, wenn sich diese im geschlossenen, den Spiegel abdeckenden Zustand befindet.

Eine Sonnenblende gemäß dem Oberbegriff des Anspruchs 1 ist in US-A-4 213 169 beschrieben.

Eine Sonnenblende der genannten Art ist auch in der deutschen Patentanmeldung P 39 36 350.3 (veröffentlicht nach den Anmeldedatum) gezeigt und beschrieben. Bei dieser Sonnenblende können beim Schließen der Abdeckklappe mitunter recht laute Anschlaggeräusche auftreten, was in hohem Grade als unangenehm empfunden wird. Das unangenehme Anschlaggeräusch ergibt sich beim Auftreffen der Abdeckklappe auf die Auflagefläche des Spiegelrahmens. Des weiteren ist beim Gegenstand der Patentanmeldung P 39 36 350.3, wie auch bei allen sonstigen, mit einer Spiegelabdeckklappe ausgerüsteten Sonnenblenden, nicht auszuschließen, daß es durch die Abdeckklappe, wenn sich diese im geschlossenen, den Spiegel abdeckenden Zustand befindet, zu unliebsamen Vibrationsgeräuschen kommen kann.

Die der Erfindung zugrundeliegende Aufgabe besteht demgemäß darin, bei einer Sonnenblende der eingangs genannten Art Vorsorge dafür zu treffen, daß Anschlags- und Vibrationsgeräusche der Abdeckklappe vermieden, zumindest aber weitgehend gedämpft werden, wobei insbesondere auch eine kostengünstige Lösung bei hoher Funktionssicherheit angestrebt wird.

Diese Aufgabe wird erfindungsgemäß dadurch gelöst, daß der Spiegelrahmen mindestens ein der Auflagefläche vorgelagertes, bei Beaufschlagung in die Ebene der Auflagefläche zurückbewegbares, als Federarm ausgebildetes Dämpfungselement aufweist, das einstückig und materialeinheitlich mit dem Spiegelrahmen ausgebildet ist.

Durch die erfindungsgemäßen Maßnahmen wird eine erhebliche Reduzierung des Anschlaggeräusches beim Schließen der Abdeckklappe erzielt, denn durch das der Anschlagfläche des Spiegelrahmens vorgelagerte, als Federarm ausgebildete Dämpfungselement kommt es nun nicht mehr zum abrupten, sondern zu einem verzögerten Stillstand der Abdeckklappe, und zwar auch dann, wenn die Schließbewegung der Abdeckklappe durch eine Feder unterstützt wird, was im allgemeinen der Fall ist. Neben der Reduzierung der Anschlaggeräusche werden auch Vibrationsgeräusche eleminiert, zumindest aber derart weitgehend gedämpft, daß sie nicht mehr als störend empfunden werden können. Zudem erfüllt die Maßnahme, das Dämpfungselement einstückig und materialeinheitlich mit dem Spiegelrahmen herzustellen, die angestrebte kostengünstige Lösung, insbesondere dann, wenn, wie bevorzugt vorgesehen, der Spiegelrahmen aus einem Kunststoff-Spritzgußteil besteht.

In Ausgestaltung der Erfindung ist bevorzugt vorgesehen, daß der Spiegelrahmen etwa rechteckig ausgebildet ist und zwei längere sowie zwei kürzere Rahmenleisten umfaßt, daß eine der längeren Rahmenleisten die daran angelenkte Abdeckklappe trägt und daß die kürzeren Rahmenleisten in der Nähe der anderen längeren Rahmenleiste jeweils ein Dämpfungselement aufweisen. Auch kann mit Vorteil vorgesehen werden, daß der bzw. jeder ein Dämpfungselement bildende Federarm aus einer Rahmenleiste, an drei Seiten freiliegend, ausgespart ist und nur mit seinem freien Ende der Anlagefläche des Spiegelrahmens vorgelagert ist. Es empfiehlt sich, daß das freie Ende des bzw. der Federarme einen bzw. jeweils einen Materialansatz aufweist, der aus der Anlagefläche vorsteht. Die Materialansätze können beim Aufschlagen der Abdeckklappe auf die Auflagefläche des Spiegelrahmens federelastisch zurückweichen und dabei die Aufprallenergie absorbieren, so daß es zur weichen Anlage kommt.

Ein Ausführungsbeispiel der Erfindung wird im folgenden anhand der Zeichnung näher erläutert. Es Zeigen
- Fig. 1: eine auseinandergezogene Darstellung einer Sonnenblende mit Achse und Spiegelkassette,

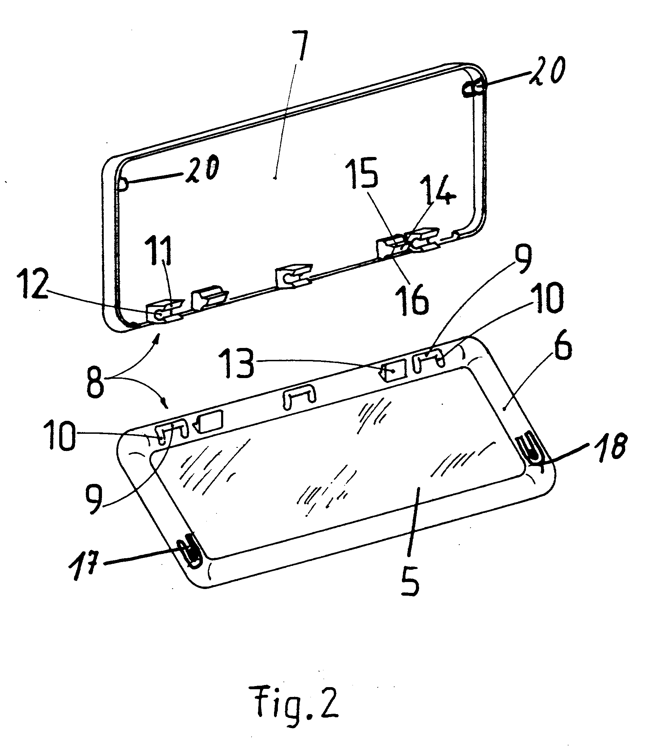

- Fig. 2: eine auseinandergezogene Darstellung der Spiegelkassette nach Fig. 1 und
- Fig. 3: eine Einzelheit der Erfindung im vergrößerten Mäßstab.

Ein im allgemeinen gepolsterter Sonnenblendenkörper 1 weist eine Achse 2 mit einem Böckchen 3 auf, mittels derer der Sonnenblendenkörper 1 an der Karosserie eines Kraftfahrzeuges in der Nähe der Windschutzscheibe befestigt ist.

Die Lagerung der Achse 2 im Sonnenblendenkörper 1 und im Böckchen 3 gestattet es, den Sonnenblendenkörper 1 sowohl nach unten gegen die Windschutzscheibe als auch seitlich gegen ein Seitenfenster zu klappen. Eine Vertiefung 4 im Sonnenblendenkörper 1 dient zur Aufnahme einer Spiegelkassette, bestehend aus einem Spiegel 5, einem Spiegelrahmen 6 und einer über den Spiegel 5 klappbaren Abdeckklappe 7. Die Spiegelkassette kann z.B. in die Vertiefung 4 mittels nicht dargestellter Rastungen eingeklipst werden.

Die Abdeckklappe 7 ist am Spiegelrahmen 6 mittels eines Scharniers 8 schwenkbeweglich befestigt. Das Scharnier 8 besteht aus an einer Längsvorderseite des Spiegelrahmens 6 materialeinheitlich angeformte Schenkel 10 und einen diese Schenkel 10 verbindenden Scharnierzapfen 9, so daß ein von der Längsvorderseite des Spiegelrahmens 6 vorstehender U-förmiger Bügel gebildet ist. Zwei solcher Bügel sind an der Längsvorderseite des Spiegelrahmens 6 in der Nähe der Seitenränder angeordnet. Die Abdeckklappe 7 weist entsprechende Scharnieraugen 11 auf, die halb geöffnet sind, so daß eine Öffnung 12 vorhanden ist, durch die sich die Scharnierzapfen 9 in die Scharnieraugen 11 einklipsen lassen.

Von den Scharnieren 8 beabstandet, sind auf dem Spiegelrahmen 6 Vorsprünge 13 und an der Abdeckklappe 7 mit diesen zusammenwirkende Rastnocken 14 angeordnet. Die Rastnocken weisen Rastflächen 15, 16 auf, die so gestaltet sind, daß sie die Abdeckklappe 7 in der vom Spiegel 5 weggeklappten Stellung und in der auf den Spiegel 5 geklappten Stellung halten

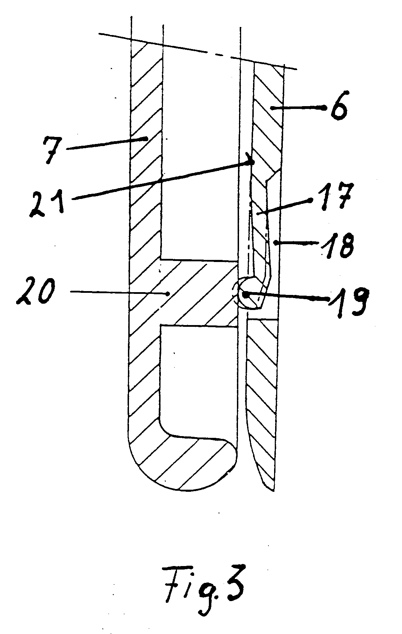

Der Spiegelrahmen 6 ist mit zwei Dämpfungselementen ausgebildet, die jeweils aus einem Federarm 17 bestehen und materialeinheitlich mit dem Spiegelrahmen 6 ausgebildet sind. Dabei ist der Spiegelrahmen, wie die Zeichnung zeigt, etwa rechteckig gestaltet und umfaßt zwei längere sowie zwei kürzere Rahmenleisten. Eine der längeren Rahmenleisten trägt die daran angelenkte Abdeckklappe 7. Die kürzeren Rahmenleisten tragen jeweils einen Federarm 17 als Dämpfungselement, und zwar in der Nähe der Rahmenleiste die nicht die Abdeckklappe trägt. Jeder der Federarme 17 ist aus einer Rahmenleiste, an drei Seiten freiliegend, ausgespart (vgl. Aussparung 18). Nur das freie Ende der Federarme 17 ist der Anlagefläche des Spiegelrahmens 6 vorgelagert und jedes freie Ende der Federarme 17 weist einen Materialansatz 19 auf, der zwecks Bildung einer punktförmigen Berührungsstelle außenseitig abgerundet ist (vgl. Fig. 3).

Beim Schließen der Abdeckklappe 7 trifft diese nicht unmittelbar auf die Auflagefläche des Spiegelrahmens 6 sondern auf die der Auflagefläche vorgelagerten Materialansätze 19 der Federarme 17 auf, wodurch das bisher unangenehm laute Aufschlaggeräusch federelastisch abgedämpft wird. Zudem dienen die Federarme 17 mit ihren, der Auflagefläche des Spiegelrahmens vorgelagerten Materialansätzen 19 dazu, Vibrationsgeräusche zu verhindern.

Fig. 3 zeigt einen Schnitt durch eine Rahmenleiste des Spiegelrahmens 6 in Höhe eines Dämpfungselements (Federarm 17) und durch den diesem benachbarten Bereich der Abdeckklappe 7. An letzterer sind ebenfalls Materialansätze 20 angeformt, die mit den Materialansätzen 19 der Federarme 17 zusammenwirken. Fig. 3 laßt auch erkennen, daß die Federarme 17 gegenüber der Dicke der Rahmenleiste relativ dünn sind und daß die Abdeckklappe 7 in der Schließstellung durch die Federarme 17 im gewissen Abstand von der Auflagefläche 21 des Spiegelrahmens 6 gehalten sind.

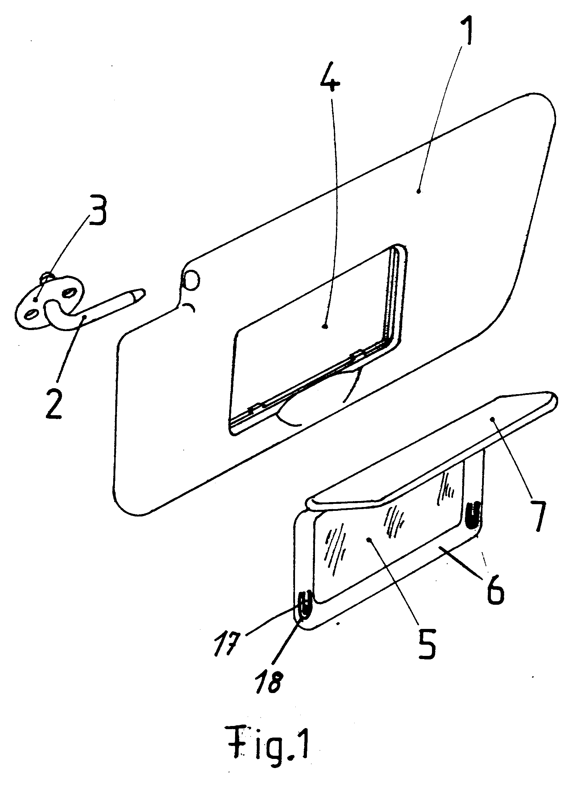

Sowohl der Spiegelrahmen 6 mit den U-förmigen Bügeln 9, 10, den Vorsprüngen 13 und den Federarmen 17 nebst Materialansätzen 19 als auch die Abdeckklappe 7 mit den Scharnieraugen 11, den Rastnocken 14 und den Materialansätzen 20 sind als Kunststoff-Spritzgußteile geformt, womit sich eine einstückige und materialeinheitliche Gestaltung ergibt. Die von den Vorsprüngen 13 auf die Rastflächen 15, 16 der Rastnocken 14 ausgeübten Kräfte reichen aus, um die Abdeckklappe 7 sich in der vom Spiegel 5 weggeklappten Stellung (Fig. 1) und auf den Spiegel 5 geklappten Stellung (Fig. 3) zu halten.

## Patentansprüche

1. Sonnenblende für Fahrzeuge mit einem Sonnenblendenkörper (1), der eine Spiegelkassette trägt, welche aus einem Spiegel (5), einem Spiegelrahmen (6) und einer daran einseitig angelenkten Abdeckklappe (7) besteht, wobei der Spiegelrahmen (6) zum einen den Spiegel (5) hält und zum anderen eine Auflagefläche (21) für die Abdeckklappe (7) bildet, wenn sich diese im geschlossenen, den Spiegel (5) abdeckenden Zustand befindet, dadurch gekennzeichnet, daß der Spiegelrahmen (6) mindestens ein der Auflagefläche (21) vorgelagertes, bei Beaufschlagung in die Ebene der Auflagefläche (21) zurückbewegbares, als Federarm (17) ausgebildetes Dämpfungselement aufweist, das einstückig und materialeinheitlich mit dem Spiegelrahmen (6) ausgebildet ist.

2. Sonnenblende nach Anspruch 1, dadurch gekennzeichnet, daß der Spiegelrahmen (6) etwa rechteckig ausgebildet ist und zwei längere sowie zwei kürzere Rahmenleisten umfaßt, daß eine der längeren Rahmenleisten die daran angelenkte Abdeckklappe (7) trägt und daß die kürzeren Rahmenleisten in der Nähe der anderen längeren Rahmenleiste jeweils ein Dämpfungselement aufweisen.

3. Sonnenblende nach Anspruch 1 oder 2, dadurch gekennzeichnet, daß der bzw. jeder Federarm (17) aus einer Rahmenleiste, an drei Seiten freiliegend, ausgespart ist und nur mit seinem freien Ende der Anlagefläche (21) des Spiegelrahmens (6) vorgelagert ist.

4. Sonnenblende nach einem oder mehreren der Ansprüche 1 bis 3, dadurch gekennzeichnet, daß das freie Ende des bzw. der Federarme (17) einen bzw. jeweils einen Materialansatz (19) aufweist, der aus der Auflagefläche (21) vorsteht.

## Claims

1. Sun visor for vehicles, having a sun visor body (1) supporting a mirror cassette, which mirror cassette comprises a mirror (5), a mirror frame (6) and a cover flap (7) which is attached to the said mirror frame on one side, the mirror frame (6) on the one hand holding the mirror (5) and on the other hand forming a bearing surface (21) for the cover flap (7) whenever the latter is in the closed state covering the mirror (5), characterized in that the mirror frame (6) exhibits at least one damping element, which is mounted before the bearing surface (21), is able, when pressurized, to be moved back into the plane of the bearing surface (21) and is configured as a spring arm (17), and is formed integrally and in one piece with the mirror frame (6).

2. Sun visor according to Claim 1, characterized in that the mirror frame (6) is of approximately rectangular configuration and comprises two longer and two shorter frame mouldings, in that one of the longer frame mouldings supports the cover flap (7) attached thereto, and in that the shorter frame mouldings exhibit, close to the other longer frame moulding, a respective damping element.

3. Sun visor according to Claim 1 or 2, characterized in that the, or each, spring arm (17) is hollowed out of a frame moulding such that it lies exposed on three sides and is mounted before the contact surface (21) of the mirror frame (6) with its free end only.

4. Sun visor according to one or more of Claims 1 to 3, characterized in that the free end of the spring arm(s) (17) exhibits one, or in each case one, material protuberance (19), which protrudes from the bearing surface (21).

## Revendications

1. Pare-soleil pour véhicules, comprenant un corps de pare-soleil (1) qui supporte une cassette à miroir constituée par un miroir (5), un cadre (6) pour le miroir, et un volet de recouvrement (7) raccordé par un côté à ce dernier, le cadre (6) du miroir contenant d'une part le miroir (5) et formant d'autre part une surface d'appui (21) pour le volet de recouvrement (7) quand ce dernier se trouve dans sa position fermée qui recouvre le miroir (5), caractérisé en ce que le cadre (6) du miroir comprend au moins un élément d'amortissement constitué sous forme d'un bras élastique (17) disposé à l'avant de la surface d'appui (21) et pouvant être repoussé vers l'arrière dans le plan de la surface d'appui (21) dans le cas d'un choc, et constitué d'un seul tenant et en le même matériau que le cadre (6) du miroir.

2. Pare-soleil selon la revendication 1, caractérisé en ce que le cadre (6) du miroir est de constitution sensiblement rectangulaire et comprend deux côtés longs et deux côtés courts, une bordure longue du cadre supportant le volet de recouvrement (7) qui lui est raccordé et les bordures courtes du cadre comportant chacune un élément d'amortissement à proximité de l'autre bordure longue.

3. Pare-soleil selon la revendication 1 ou 2, caractérisé en ce que le ou chaque bras élastique (17) formant un élément d'amortissement est constitué par évidement d'une bordure du cadre, à trois côtés libres, et qui ne se dispose à l'avant de la surface d'appui (21) du cadre (6) du miroir que par son extrémité libre.

4. Pare-soleil selon une ou plusieurs des revendications 1 à 3, caractérisé en ce que l'extrémité libre du ou des bras élastiques (17) comprend chacune une saillie (19) qui s'étend à partir de la surface d'appui (21).
